(19) Europäisches Patentamt
European Patent Office
Office européen des brevets

(11) **EP 3 240 976 B1**

(12) **EUROPÄISCHE PATENTSCHRIFT**

(45) Veröffentlichungstag und Bekanntmachung des Hinweises auf die Patenterteilung:
**30.07.2025 Patentblatt 2025/31**

(21) Anmeldenummer: **15817419.3**

(22) Anmeldetag: **29.12.2015**

(51) Internationale Patentklassifikation (IPC):
**F24S 23/74** *(2018.01)*

(52) Gemeinsame Patentklassifikation (CPC):
**F24S 23/74; F24S 23/79; F24S 50/20;** Y02E 10/47

(86) Internationale Anmeldenummer:
**PCT/EP2015/081374**

(87) Internationale Veröffentlichungsnummer:
**WO 2016/107882 (07.07.2016 Gazette 2016/27)**

(54) **CSP TRACKING**

CSP TRACKING

ASSERVISSEMENT DE CENTRALE SOLAIRE THERMIQUE À CONCENTRATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.12.2014 DE 102014019588**

(43) Veröffentlichungstag der Anmeldung:
**08.11.2017 Patentblatt 2017/45**

(73) Patentinhaber: **Cambras GmbH**
**18107 Elmenhorst (DE)**

(72) Erfinder: **KIRSCHT, Lukas**
**99092 Erfurt (DE)**

(74) Vertreter: **Vossius & Partner**
**Patentanwälte Rechtsanwälte mbB**
**Siebertstrasse 3**
**81675 München (DE)**

(56) Entgegenhaltungen:
DE-A1- 102008 021 730     US-A- 4 445 030
US-A1- 2004 079 863       US-A1- 2013 092 155
US-A1- 2013 133 640       US-B1- 6 274 862

**Beschreibung**

Die vorliegende Erfindung betrifft ein System sowie ein Verfahren, um Sonnenenergie konzentrierende Systeme der Sonne nachzuführen. Als Oberbegriff üblich ist auch der englische Terminus Concentrated Solar Power ("CSP"). In solchen Systemen und Verfahren wird üblicherweise die Direktstrahlung der Sonne mit Reflektoren auf einen Receiver bzw. Solarabsorber gebündelt. Da sich der Sonnenstand mit der Zeit ändert, ist die Ausrichtung von Komponenten des Systems entsprechend anzupassen, also der Sonne nachzuführen.

CSP Systeme bündeln also die Direktstrahlung der Sonne durch Verwendung fokussierender Reflektorflächen, die das einfallende Sonnenlicht auf den Absorber bündeln. Der Reflektor und der Absorber werden der Sonne nachgeführt. Die Systeme sammeln so Sonnenenergie über eine große Fläche des Reflektors und konzentrieren diese auf einer vergleichsweise kleinen Fläche des Receivers. So konzentrieren beispielsweise der Reflektor oder Kollektor auf einer Fläche von 60m$^2$ einfallende Strahlung auf eine Receiverfläche von 1m$^2$. So können durch das Verhältnis von großer Kollektorfläche und kleiner Receiverfläche geringe Verluste und hohe Temperaturen erreicht werden.

In sogenannten Solarfarmkraftwerken wird die Wärme in vielen über die Fläche verteilten Absorbern bzw. Receivern gesammelt, während beispielsweise in Solarturmkraftwerken oder Paraboloidkraftwerken die Strahlung der Sonne mit Punktkonzentratoren auf einen Brennpunkt gebündelt wird. All diese Systeme unterscheiden sich in vielen Merkmalen von direkten Solarsystemen oder Solarstromanlagen, wie zum Beispiel Photovoltaikanlagen, sowie von solarthermischen Anlagen ohne Bündelung, wie beispielsweise Thermikkraftwerken.

Zu den CSP-Systemen im Sinne der vorliegenden Erfindung gehören insbesondere und vorzugsweise Systeme mit aus einem oder vielen parallel geschalteten ParabolrinnenKollektoren oder Fresnel-Kollektoren, so genannten Linienkonzentratoren. Im Kollektorfeld wird ein beispielsweise ein Wärmeträgermedium erhitzt, beispielsweise Thermoöl oder überhitzter Wasserdampf. Das erhitzte Wärmeträgermedium wird anschließend wie in einem zur Gewinnung elektrischer Energie beispielsweise einer Turbine und einem Generator zugeführt.

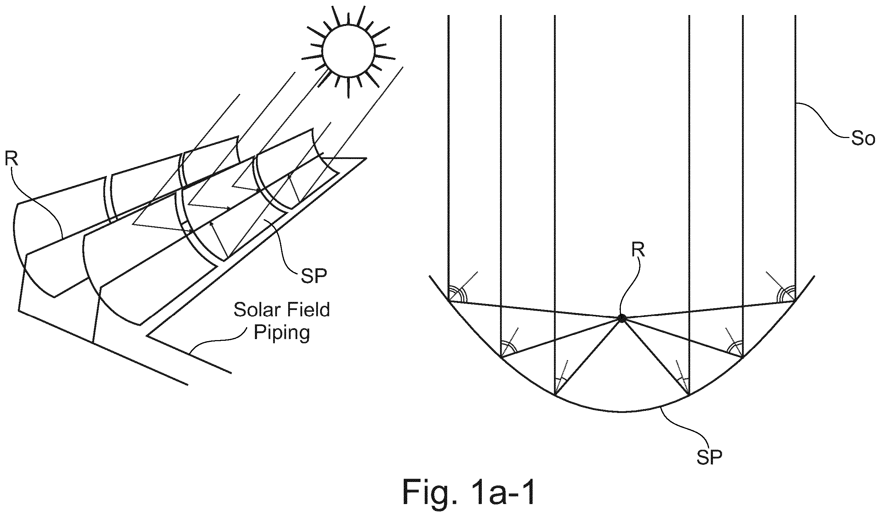

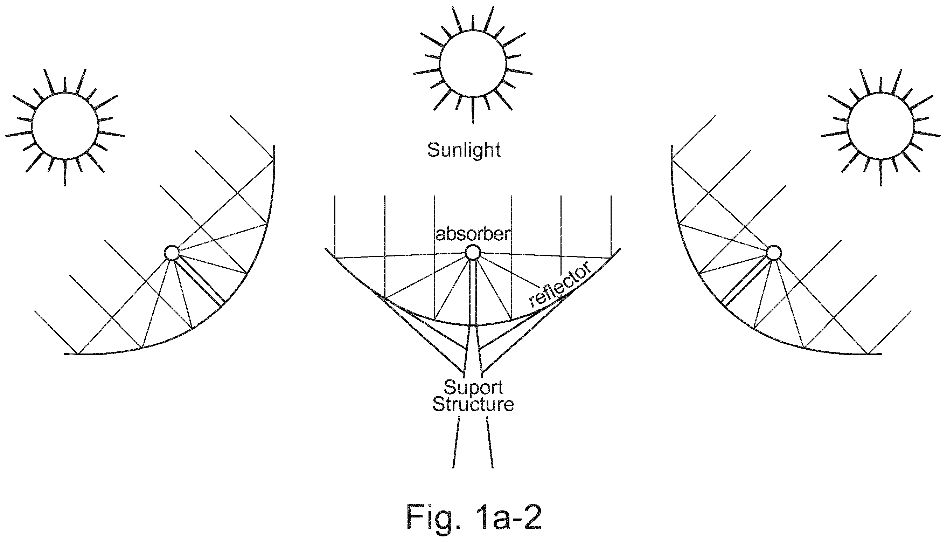

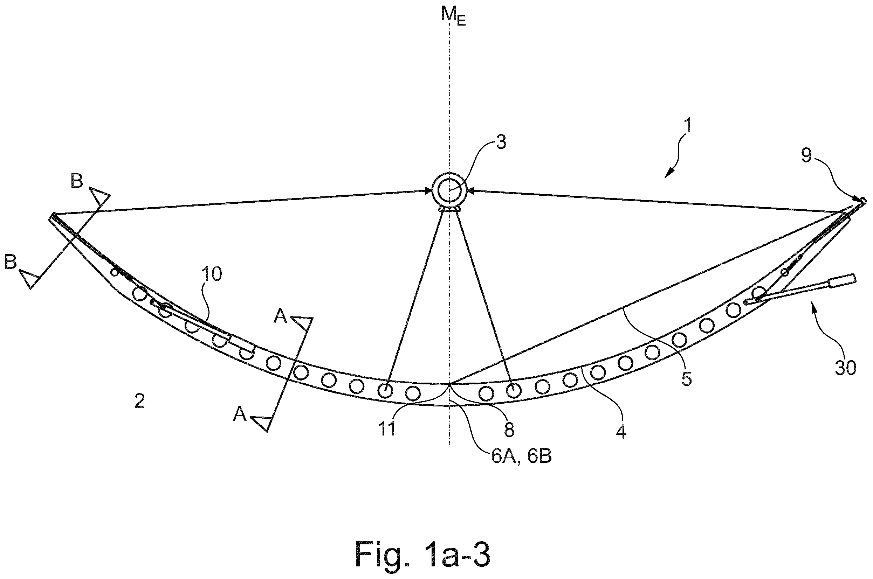

Das System eines Parabolrinnenkraftwerks ist in **Fig. 1a-1** beispielsweise dargestellt. Parabolrinnenkollektoren bestehen aus gewölbten Spiegeln SP, die das Sonnenlicht So auf ein in der Brennlinie (vgl. rechte Darstellung) verlaufendes Absorberrohr bzw. eines sogenannten Receivers R bündeln. In den Absorberrohren wird die konzentrierte Sonnenstrahlung in Wärme umgesetzt und an ein zirkulierendes Wärmeträgermedium abgegeben. Das Wärmemedium wird dann über Rohre (Solar Field Piping) der weiteren Verwendung bzw. Energiegewinnung(-Umwandlung zugeführt. Die Parabolrinnen werden aus Kostengründen meist nur einachsig der Sonne nachgeführt. Sie sind deshalb in Nord-Süd-Richtung angeordnet und werden nur nach der Höhe des Sonnenstandes im Tagesverlauf nachgeführt bzw. gekippt. Dies ist schematisch in Fig. 1a-2 dargestellt.

Parabolrinnen bzw. Parabolrinnenspiegel sind dabei in einem Querschnitt, vorzugsweise im Querschnitt senkrecht zur Rinnenachse, im Wesentlichen parabelförmig aufgebaut. Eine solche Spiegelform hat die Eigenschaft, alle parallel zu Ihrer zur Symmetrieachse einfallenden Strahlen durch den Brennpunkt der Parabel zu reflektieren (vgl. rechte Darstellung in Fig. 1a-1). Dieses geometrische Prinzip wird u. a. für Parabol(rinnen)spiegel genutzt, die eine Parabolfläche mit reflektierenden Oberflächen (Spiegeln) verwenden, um einfallendes Sonnenlicht in einem Brennpunkt bzw., im Falle eines Parabolrinnenspiegels, auf einer Brennlinie zu konzentrieren. Die Energie des gebündelten Sonnenlichts wird durch sogenannte Receiver, die entlang des Brennpunkts bzw. der Brennlinie montiert sind, absorbiert und, beispielsweise in Wärme umgewandelt, zur weiteren Energieumformung verwendet. Bekannte Parabolrinnenspiegel weisen dabei im Wesentlichen einen als Reflektor bezeichneten rinnenartigen bzw. gekrümmten Spiegel (bzw. eine Vielzahl von Spiegeln, die zusammen eine Rinne bilden), ein als Receiver bezeichnetes Absorberrohr und eine Stützkonstruktion bzw. einen Unterbau auf.

**Fig. 1a-3** zeigt eine schematische Darstellung einer beispielhaften Reflektorkonstruktion mit einem Parabolrinnenspiegel 1. Der Parabolrinnenspiegel 1 weist dabei eine beispielhafte Hinter- oder Stützkonstruktion in Form eines Führungsbogens 2 mit einem Receiver in Form eines Absorberohrs 3 auf. Der Führungsbogen 2 stellt hier eine erste gebogene Führungsmatrix 4 bereit, die einem Spiegelelement, hier einem ersten biegsamen Dünnglas 5 als Auflage dient (auf der rechten Hälfte des Parabolrinnenspiegels 1 von **Fig. 1a-3** dargestellt), wenn dieses durchgebogen und auf dem Führungsbogen 2 eingespannt wird. In **Fig. 1a-3** ist das Dünnglas 5 im ungebogenen und angespannten Zustand gezeigt. Der Führungsbogen 2 stellt weiterhin bevorzugt eine zweite gebogene Führungsmatrix bereit, die der ersten im wesentlichen entspricht und ihr im dargestellten Querschnitt gegenüberliegend angeordnet ist. Sie dient einem zweiten biegsamen Dünnglas 10 als Auflage, das hier auf der linken Hälfte des Parabolrinnenspiegels gebogen dargestellt ist. Die Rinne kann einen Radius bwz. eine Öffnungs- oder Apterurweite der Parabel von etwa 1 bis 8 m, vorzugsweise von etwa 1,5 - 5 m haben, wobei die Krümmung in einer Seitenansicht des Parabolspiegels 1 entlang der Führungsmatrix 4 variieren kann.

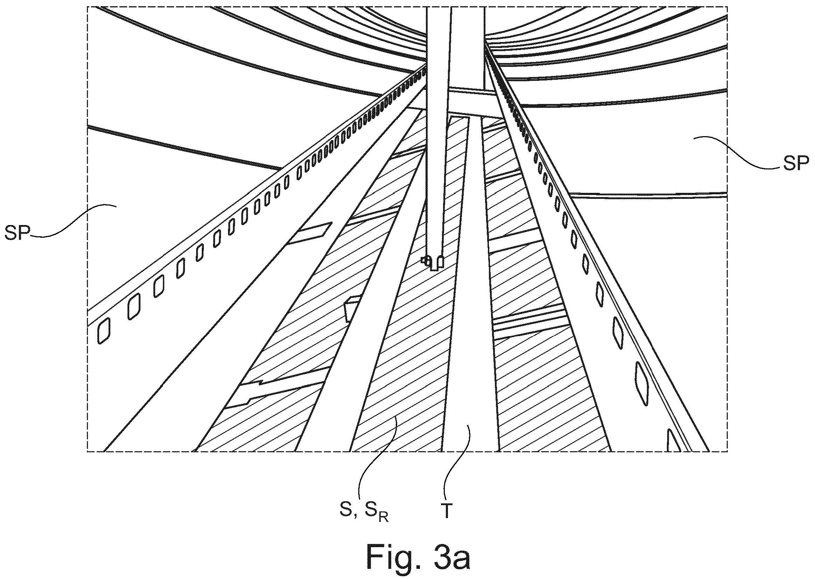

Die Führungsmatrix des Führungsbogens 2 kann, wie hier dargestellt, durch gebogene Rippen 6A, 6B gebildet sein. Im Bereich der Bezugszeichen 6A, 6B, an der in der Darstellung gemäß **Fig. 1a-3** die Rippen aneinanderstoßen, also im tiefsten Punkt der Rinne, können die Rippen voneinander beabstandet sein. Vorzugsweise verläuft dann entlang der Längsachse der Rinne an diesem Punkt (des Querschnitts) ein Träger, bspw. ein sogenanntes Torsionsrohr. Dies ist beispielsweise den Darstellungen gemäß Fig. 3a,3b, 3c, 3d, 3e, 6, 7 und 8b zu entnehmen. Dieser Träger ist mit der Stützkonstruktion bzw. Führungsmatrix fest verbunden. Vorzugsweise verläuft er parallel zu einer Schwenkachse, die wiederum vorzugsweise entlang des tiefsten Punkts der Rinne verläuft, und entlang der die Rinne geschwenkt werden kann, um eine optimale Ausrichtung zur Sonne zu bewirken. Alternative Ausgestaltungen, sowohl des allgemeinen Aufbaus, beispielsweise die Verwendung von vorgebogenen Spiegelelementen und anderen Einspannungen oder anderen Hinterkonstruktionen, als auch der Nachführung und deren Achse sind bekannt. Die Diskussion der vorliegenden Erfindung hierin schließt die zuvor beschriebenen Konstruktionen ein, ist aber nicht darauf beschränkt.

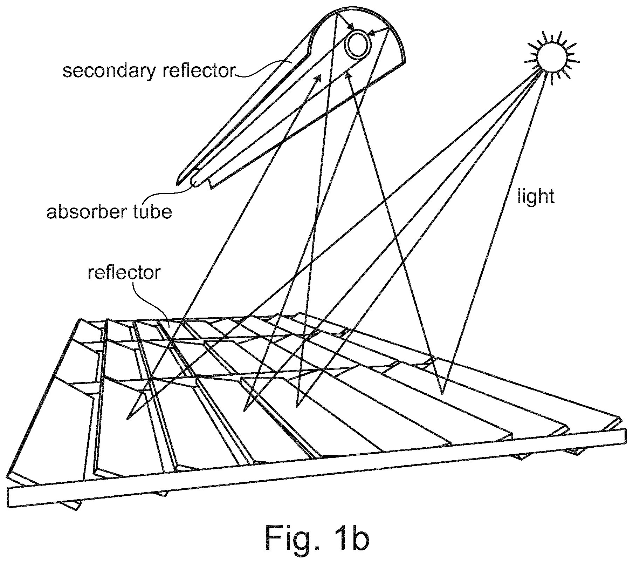

Eine Weiterentwicklung der Parabolrinnen sind die sogenannten **Fresnel-Spiegel-Kollektoren,** vgl. **Fig. 1b.** Mehrere ebenerdig angeordnete parallele, ungewölbte oder auch leicht gewölbte Spiegelstreifen (‚reflector') (nach dem Prinzip einer Fresnel-Linse) reflektieren die einfallende Direktstrahlung des Sonnenlichts (‚light') auf ein Absorberrohr (‚absorber tube'). Es kann mit einem zweiten Reflektor (‚secondary reflector') gearbeitet werden, der eine bessere Fokussierung auf das Absorberrohr bewirkt. Die Streifen werden einachsig nachgeführt. Ein zusätzlicher Sekundärspiegel hinter dem Rohr lenkt die Strahlung auf die Brennlinie.

Diese Bauweise verbindet die Funktionsprinzipien von Parabolrinnenkollektoren und Turmkraftwerken miteinander, wobei sowohl auf gewölbte Spiegel (siehe oben, es können auch leicht gewölbte Spiegel zum Einsatz kommen) als auch auf mehrachsige Sonnenstandsnachführungen verzichtet wird und der modulare Aufbau erhalten bleibt. Das Absorberrohr wird im Gegensatz zu den meisten Parabolrinnenkonstruktionen nicht bewegt. So können sehr lange Kollektoren gebaut werden, die durch fehlende Rohrbögen und flexible Verbindungen geringe Strömungswiderstände für das Wärmeträgermedium aufweisen. Dem stehen Verschattungsverluste zwischen den Spiegelstreifen gegenüber.

Die Diskussion der vorliegenden Erfindung hierin schließt die zuvor beschriebenen Konstruktionen ein, ist aber nicht darauf beschränkt.

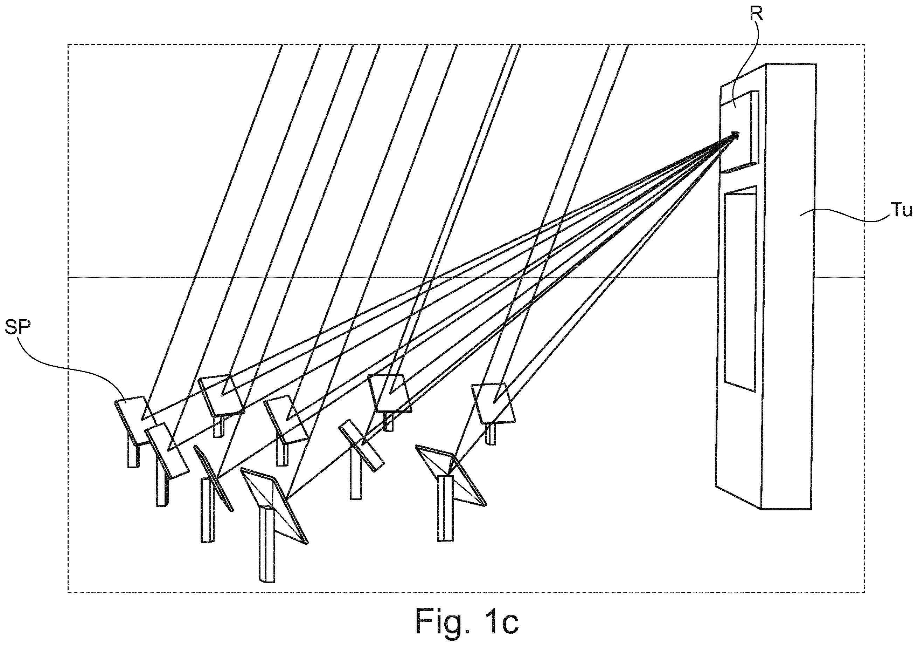

Beim **Solarturmkraftwerk,** vgl. **Fig. 1c,** auch Zentralreceiverkraftwerk ist der Absorber R auf einem Turm Tu erhöht angeordnet. Bei Sonnenschein richten sich eine Vielzahl, hunderte bis tausende, automatisch positionierende Spiegel SP (Heliostate) so aus, dass das Sonnenlicht auf den zentralen Absorber (Receiver) reflektiert wird. Durch starke Konzentration der Sonneneinstrahlung entstehen an der Spitze des Turms hohe Temperaturen von bis zu mehreren 1.000 °C.

Die Diskussion der vorliegenden Erfindung hierin schließt die zuvor beschriebenen Konstruktionen ein, ist aber nicht darauf beschränkt.

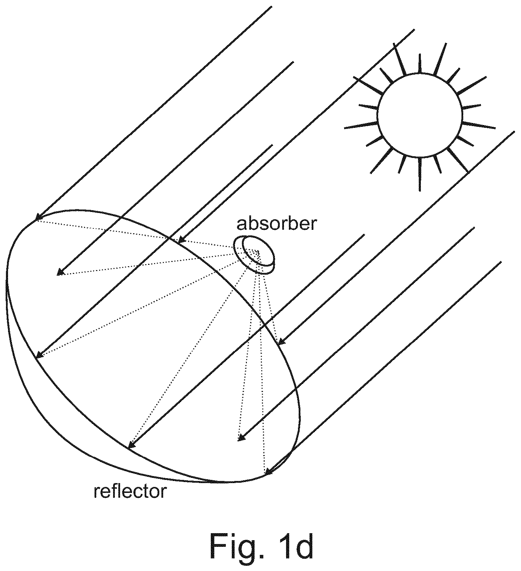

Weitere Systeme, in der Regel zur dezentralen Anwendung mit kleinerem Leistungsbereich, sind beispielsweise Anlagen mit Parabolspiegel (parabolic dish) bzw. Solar-Stirling Anlagen, in denen solarthermische Energie mit einem Stirlingmotor in mechanische Energie umgewandelt wird. Damit wird in der Regel in einem direkt angekoppelten Generator elektrische Energie erzeugt. Vgl. **Fig. 1d.**

Die Diskussion der vorliegenden Erfindung hierin schließt die zuvor beschriebenen Konstruktionen ein, ist aber nicht darauf beschränkt.

Durch die Bündelung der Sonnenstrahlung auf eine vergleichsweise kleine Receiverfläche ist eine genaue Ausrichtung und Fokussierung der Sonnenstrahlung erforderlich. Hinzu kommt die Veränderung der Sonnenposition und damit des Einfallswinkels der Sonneneinstrahlung abhängig von der Zeit bzw. dem Sonnenstand. Daher wird eine Nachführung benötigt, um Solarenergie konzentrierende Systeme der Sonne nachzuführen. Dabei wird üblicherweise die berechnete Sonnenposition als Istwert verwendet. Dies wirft jedoch in der Praxis Probleme auf.

Insbesondere kann die tatsächliche Sonneneinstrahlung von der aufgrund der berechneten Position der Sonne erwarteten Sonneneinstrahlung abweichen. Diese Abweichung ist nicht Astronomisch bedingt, sondern ist beispielsweise begründet durch Lichtbrechungen der Sonneneinstrahlung an Luftschichten mit stark unterschiedlichen Temperaturen. Weiterhin entstehen Abweichungen von den vorberechneten bzw. berechenbaren Strahlungswegen durch konstruktive Ungenauigkeiten beim Bau des Systems, konstruktive Ungenauigkeiten die sich im Laufe des Betriebes ergeben, z.B. Fundamentbewegungen, sowie konstruktive Ungenauigkeiten durch den Verschleiß von Antrieben, sowie sich durch sensorische Schwierigkeiten bei der Aufnahme der Istposition ergebende Ungenauigkeiten.

Daraus ergibt sich eine Reihe von Anforderungen an Komponenten des Systems. Beispielsweise kommt der Hinterkonstruktion, die den Reflektor und/oder Receiver hält, Bedeutung bei der exakten Positionierung von Reflektor und/oder Receiver zu. Daher sind hohe Anforderungen an Maßhaltigkeit, Witterungsbeständigkeit, Windlast und Gewicht zu erfüllen. Auch das Nachführungssystem bzw. Tracking, ob diskontinuierlich oder kontinuierlich, muss Anforderungen bezüglich Anfahrgenauigkeit, Haltegenauigkeit, Energieverbrauch, Ausfallsicherheit und Richtlinienkonformität erfüllen. Den Systemkomponenten, insbesondere von Hinterkonstruktion und Nachführung kommt besondere Bedeutung bei den oben erwähnten konstruktiv bedingten Ungenauigkeiten bei der Nachführung zu.

Um die genannten und weitere Probleme bei der Nachführung abzuschwächen oder auszulöschen werden Systeme eingesetzt, die die tatsachliche Position der Sonne bzw. die von der erwarteten Sonneneinstrahlung abweichende tatsächliche Sonneneinstrahlung bestimmen. Hierbei ist insbesondere der Einfallswinkel der Sonnenstrahlung auf den Reflektor von Bedeutung.

Hierzu ist es einerseits bekannt, Systeme einzusetzen, die komplett eigenständig und nicht mit der nachzufuhrenden Konstruktion verbunden sind und die die tatsächliche Position der Sonne bestimmen. Dazu gehört beispielsweise eine Sonnenuhr. Hierbei werden aber zumindest die sich durch konstruktive Ungenauigkeiten, durch Verschleiß oder Alterung ergebenden oben angesprochenen Probleme regelmäßig nicht behoben.

Alternativ ist es bekannt, die Positionsmessung mit der Systemkonstruktion zu verbinden und hier eine relative Positionsmessung der Sonne zum konzentrierenden System durchzuführen. Bei dieser Messung sind Wege gekannt, die Einstrahlung direkt am Receiver zu messen. Auch dies hat sich aber als nicht gangbarer Weg herausgestellt. Insbesondere sind die Strahlungsintensität/-dichte am Receiver sehr hoch, so dass die erforderlichen Sensor- sowie Bauteilanforderungen außerhalb des verfügbaren Rahmens liegen - sowohl was wirtschaftliche Kriterien als auch die generelle Erfüllung der technischen Anforderungen angeht. Sofern verfügbar ist die Lebenzeit der Bauteile extrem kurz.

Auch ist es bekannt, auf die Beobachtung eines Schattens mittels spezieller Sensoren zurückgegriffen, die den Schattenwurf analysieren. Hierbei wird mit Hilfe eines Sensors mit zwei Photovoltaik(PV)-Zellen der Schattenwurf einer Blende analysiert. Verläuft der Schatten symmetrisch auf der Mittelachse der PV-Zellenanordnung, so haben die Spannungen der beiden Zellen den gleichen Wert. Wandert der Schatten durch Bewegung des Kollektors, oder der Sonne, aus der Mitte heraus, so reduziert sich die Spannung der Zelle, die mehr verschattet wird als die andere.

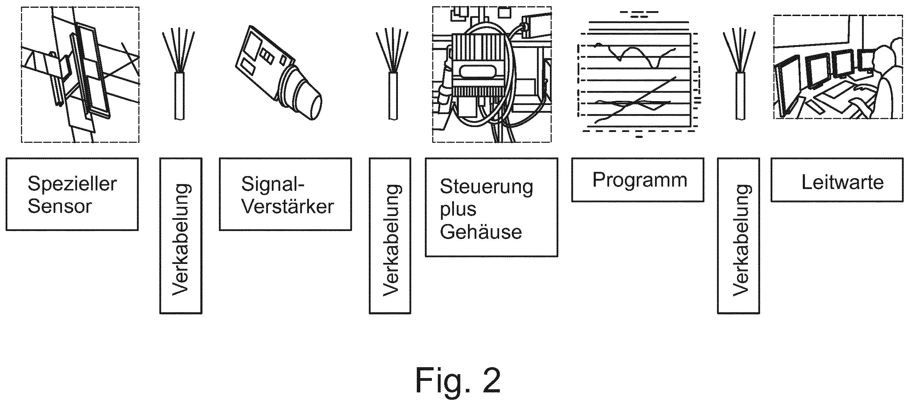

Ein derartiges System besteht üblicherweise aus einem PV-Zellen Sensor, der über eine Verkabelung mit einem Signalverstärker verbunden ist, der wiederum über eine Verkabelung mit einer separaten Steuerungseinheit im Solarfeld zur Signalverarbeitung, die in einem eigenen Gehäuse untergebracht ist, verbunden ist. Die Steuerung führt ein Programm zur Analyse der Signalwerte aus und übermittelt die Ergebnisse über eine Verkabelung über eine Schnittstelle an die Leitwarte. Von dort aus werden dann Steuerungssignale an die Anlage zur entsprechenden Systemnachführung gesendet. Dies ist schematisch in **Fig. 2** dargestellt.

Derartige Systeme haben sich jedoch in mehrere Hinsicht als nachteilig erwiesen. So sind sie zum Einen komplex und kosten- sowie wartungsintensiv in Aufbau und Unterhalt. So müssen sie zum Bespiel etwa zwei Mal täglich oder öfter geputzt werden. Zum Anderen ist die Auflösung und Genauigkeit der Systeme nicht ausreichend. Auch ist die Lebenszeit des Systems begrenzt und es entstehen hohe Kosten durch sowohl konstruktionsbedingte Wartungsarbeiten und Reparaturen als durch softwarebedingte Wartung. Schließlich ist das Gesamtsystem aufwändig zu Installieren, unter großen Eingriffen in die bestehende Systemarchitektur.

Aus der CN 203012516 U ist ein Photovoltaiksystem mit einer Systemnachführung bekannt. Die Systemnachführung bedient sich eines definierten geometrischen Körpers, nämlich eines Konus, der auf einer durchsichtigen Glasscheibe angebracht ist sowie einer Camera Obscura.

Dabei wird die geometrische Form des Schattens des Konus auf der transparenten Scheibe erfasst und dessen Höhe berechnet. Die Nachführung des PV-Systems erfolgt über mehrere Achsen. Dieses System bedient sich einer separaten Einheit um die Ist-Position der Sonneneinstrahlung zu berechnen, die einen komplexen Aufbau aus mehreren zusammenwirkenden Teilen hat. Die geometrische Auswertung ist fehleranfällig und hängt insbesondere von der akkuraten Positionierung der einzelnen Teile zueinander ab. Der beschriebene Aufbau erfüllt schließlich auch nicht die hohen Anforderungen an die Genauigkeit der Nachführung, wie sie im Bereich der vorliegenden Anwendung erforderlich ist. Die Verwendung von Sonnenenergie zur Energiegewinnung durch Photovoltaikelemente benötigt keine vergleichbare Konzentration von auf einer großen Reflektorfläche einfallender Strahlung auf eine kleine Receiverfläche. Daher hat auch eine vergleichsweise ungenaue Ausrichtung der Photovoltaikelemente zur Sonne keine starken Auswirkungen auf die Effizienz der Anlage. In der Regel werden Abweichungen von 1° zur optimalen Ausrichtung toleriert. Bei stationären PV-Anlagen, bspw. im privaten Betrieb wird üblicherweise sogar eine Abweichung von 30° zum optimalen Strahlungseinfall toleriert. In CSP-Systemen ist eine Abweichung von 1° oder mehr dagegen regelmäßig unerwünscht, da dies bereits signifikante Auswirkungen auf die Effizienz der Anlage hat. Im Bereich CSP hat dies unter anderem mit der Geometrie des Kollektors zu tun. Hier sind beispielsweise zwei Systemparameter zu beachten:

- die Entfernung vom Receiver zur Spiegeloberfläche, und
- der Durchmesser des Receivers.

Z.B. kann bevorzugt eine Parabolrinne mit einer Brennlinie bei ca. 1795 mm und einer Öffnungsweite von 6000mm sowie ein Receiverrohr von 70 mm Durchmesser verwendet werden.

Der kleinste Abstand zwischen Spiegel und Receiver ist 1795 mm, der größte Abstand, an den Enden der Parabel, ist ca. 3100 mm.

Durch die Sonnengröße von ca. 0,5° (als Winkelausschnitt von der Erde gesehen) ergibt sich dafür theoretisch eine Brennlinienbreite von ca. 27 mm. Soweit ist die Berechnung leicht nachzuvollziehen.

Es kommen jedoch noch weitere, nicht vorhersagbare Faktoren hinzu. Zum Beispiel

- die mechanischen Komponenten (u.a. Konstruktion, Receiverrohrhalter, Fundamente usw.)
- die Spiegelungenauigkeiten
- sowie die Antriebsungenauigkeiten.

Allein der Sonnedurchmesser, die Spiegelungenauigkeit und die mechanischen Komponenten reizen die in diesem Beispiel zur Verfügung stehenden 70 mm Receiverrohrdurchmesser aus. So erlangen exakte Fertigungs- und Konstruktionsmaße große Bedeutung und auch bei der Antriebstechnik auf jedes zehntel oder gar hundertstel Grad an.

US 2013/133640 A1 offenbart, dass in einem Strahlungsbündler mit einem gekrümmten Spiegel, der so beschaffen ist, dass er Licht auf einen Energiesammelkörper fokussiert, der an der Brennachse des Spiegels angebracht ist, eine Vorrichtung und ein Verfahren zur Ausrichtungskorrektur eine lineare Anordnung von Lichtdetektoren umfasst, die so beschaffen sind, dass sie an einer Unterseite und quer zu einer Mittellinie des gekrümmten Spiegels angebracht werden können, um den Schatten abzufangen, der von dem entlang der Brennachse angebrachten Energiesammelkörper geworfen wird. Die Ausgangssignale der einzelnen Detektoren werden gemessen und entsprechend der Reihenfolge der Anordnung der Lichtdetektoren auf dem Array aufgezeichnet. Wenn ein Schatten auf das Array fällt, ergibt sich ein Einbruch der Ausgangsleistung bei benachbarten Detektoren. Eine Schattendetektionseinrichtung ist so ausgelegt, dass sie einen Mittelpunkt des Einbruchs bestimmt, und eine Korrektureinrichtung ist so konfiguriert, dass sie einen Korrekturbefehl ausgibt, wenn der Mittelpunkt von einer optimalen Position verschieden ist.

US 2013/092155 A1 offenbart ein fokales Anzeigefeld, das sich in einem parabolischen Solarenergie-Sammel-Array befindet, das reflektierende Oberflächen und ein Rohr mit einem zu erhitzenden Arbeitsfluid aufweist. Das Panel umfasst einen Zielbereich zur Anzeige von Licht- und Schattenmustern, die von der Anordnung reflektiert werden, und stellt ein visuelles Mittel zur Bestimmung des Betrags bereit, um den der Brennpunkt der parabolischen Anordnung den Mittelpunkt des Rohrs, das das erwärmte Arbeitsfluid enthält, gegebenenfalls verfehlt.

Die vorliegende Erfindung geht von der **Aufgabe** aus, ein verbessertes CSP-System bereitzustellen. Das System soll dabei vorzugsweise die Nachteile des Standes der Technik überwinden. Insbesondere soll es einfach, wirtschaftlich, langlebig und genau sein.

Diese Aufgabe wird insbesondere durch ein verbessertes Nachführungssystem und -verfahren erfüllt, insbesondere für CSP-Systeme. Die Aufgabe wird mit den Merkmalen der unabhängigen Ansprüche erfüllt. Die abhängigen Ansprüche, sowie die nachfolgend beschriebenen Merkmale stellen bevorzugte zusätzliche oder alternative Ausführungen dar.

Gemäß der vorliegenden Erfindung wird zur Ermittlung der tatsächlichen Sonneneinstrahlung bzw. zum Nachführen des Reflektors in Abhängigkeit vom Einfallswinkel der Sonnenstrahlung vorzugsweise auf den Schatten einer Schattenblende zurückgegriffen, die fest mit der Konstruktion verbunden ist. Weiter bevorzugt wird der Schatten der Schattenblende, die vorzugsweise Teil der bestehenden Konstruktion ist, und weiterhin vorzugsweise der des Receivers selbst ist, herangezogen. Dies erlaubt eine besonders einfache und langlebige Konstruktion, vorzugsweise ohne Bedarf an zusätzlichen Teilen oder Anbauten. Gleichermaßen wird ein hoher Grad an Zuverlässigkeit erreicht, insbesondere da die Schattenblende integraler Teil der Konstruktion ist und so keine Schnittstellenabweichungen entstehen.

*Fig. 3a* zeigt das Beispiel des Schattenwurfes eines Receiverrohres im Kollektor. In der dargestellten Ausrichtung des Receivers und des Kollektors einer Parabolrinnenanlage liegt der Schatten S des Receiverrohrs R (in der Darstellung nicht sichtbar) nicht direkt auf den Kollektorspiegeln sondern auf einem Träger T der Hinterkonstruktion. In gängigen Konstruktionen von Parabolrinnen werden diese aus zwei Symmetrisch zu einer Mittelachse angeordneten Spiegelreihen aus gekrümmten Spiegeln SP gebildet. Die Spiegel SP sind dabei auf gegenüberliegenden Seiten eines mittig längs verlaufenden Trägers T angeordnet. Träger T sowie Receiverrohr R liegen bevorzugt in der Mittenebene $M_E$ der Parabolrinne (vgl. Fig. 1a-3). Bei einer optimalen Ausrichtung der Rinne zur Sonne schlägt sich der Schatten $S_R$ des Receiverrohrs R mittig auf dem Träger nieder, wie in der Darstellung gemäß Fig. 3a angedeutet. Es ist klar, dass als Träger T jeglicher Schattenempfänger verwendet werden kann. Es muß sich nicht um ein tragendes Konstruktionselement handeln.

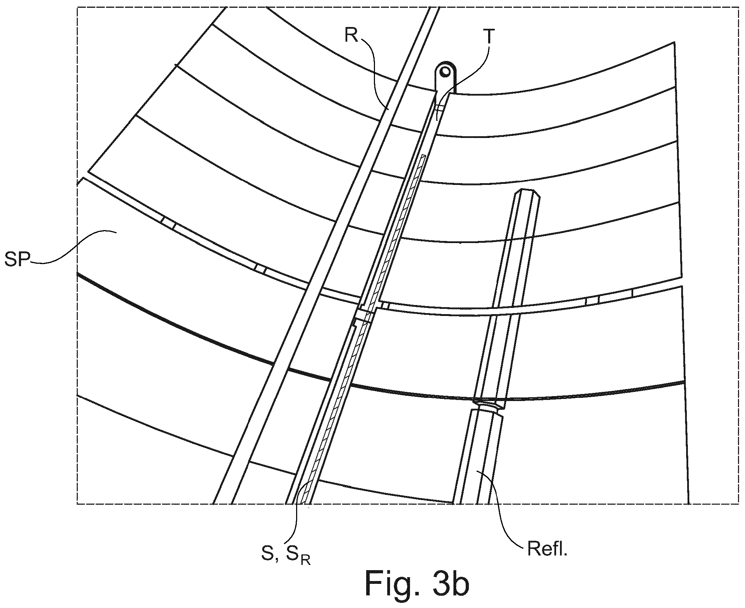

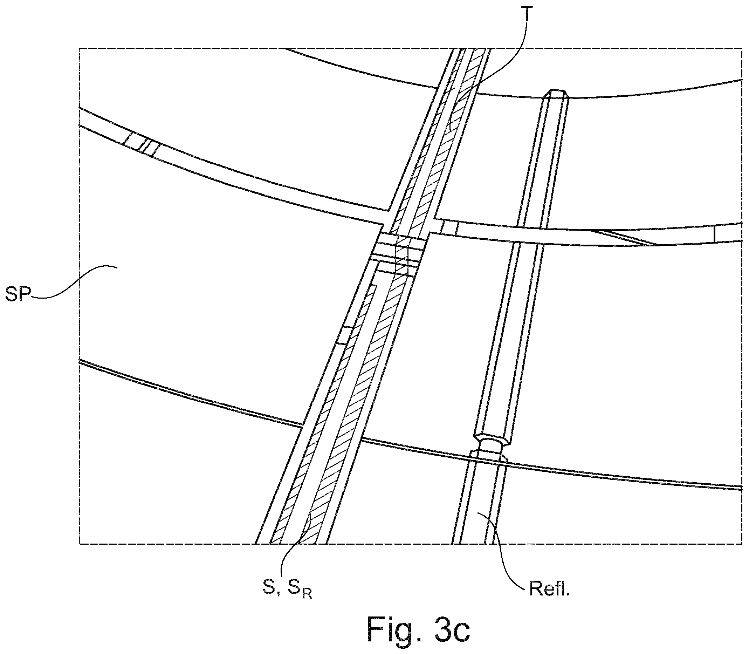

Die Darstellung gemäß **Fig. 3b** zeigt ein Szenario gemäß **Fig. 3a** in gerenderter Form. Tragende Teile der Kollektoranordnung wurden hier zur verbesserten Darstellung weggelassen (wie beispielsweise Stützen des Receiverrohrs, das hier frei zu schweben scheint, tatsächlich aber mechanisch fest positioniert ist). Zusätzlich zur Darstellung in **Fig. 3a** ist in **Fig. 3b** die Reflexion Refl. bzw. Spiegelung des Receiverrohrts R auf dem Spiegel SP zu erkennen. Diese Spiegelung variiert mit Veränderung des Betrachterstandpunktes, im Gegenteil zum Schatten, der unabhängig ist von der Position des Betrachters. Fig. 3c zeigt einen Detailausschnitt der gerenderten Darstellung gemäß **Fig. 3b,** in der das Receiverrohr nicht sichtbar ist.

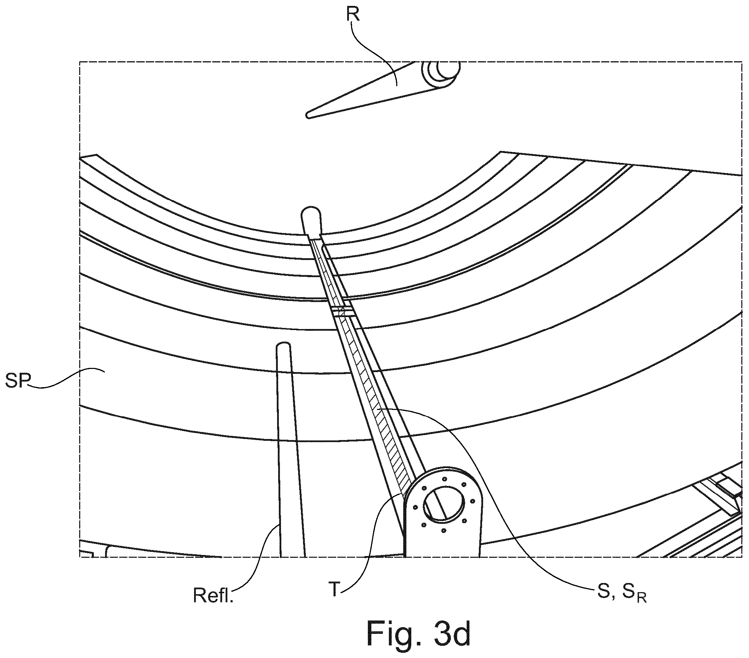

Entsprechend zeigt **Fig. 3d** eine weitere beispielhafte Ansicht eines Szenarios gemäß **Fig. 3a** in gerenderter Form. Tragende Teile der Kollektoranordnung wurden auch hier zur verbesserten Darstellung weggelassen (wie beispielsweise Stützen des Receiverrohrs, das hier frei zu schweben scheint, tatsächlich aber mechanisch fest positioniert ist). Auch in **Fig. 3d** die Reflexion Refl. bzw. Spiegelung des Receiverrohrts R auf dem Spiegel SP zu erkennen. Hier aufgrund des anderen Betrachterstandpunkts an einer anderen Stelle. Beispielhaft ist dies auch am hier graphisch eingefügten Schriftzug 'erfis' zu erkennen, der ebenfalls im Spiegel reflektiert wird.

Fig. 3e zeigt einen Detailausschnitt einer gerenderten Darstellung gemäß **Fig. 3b** oder **Fig. 3c,** in der Stützen $R_{ST}$ des Receiverrohrs R sichtbar sind, ebenso wie eine entsprechende Reflexion.

**Fig. 4** zeigt die geometrischen Bedingungen des Schattenwurfs am Beispiel des Receiverrohrschattens und **Fig.**

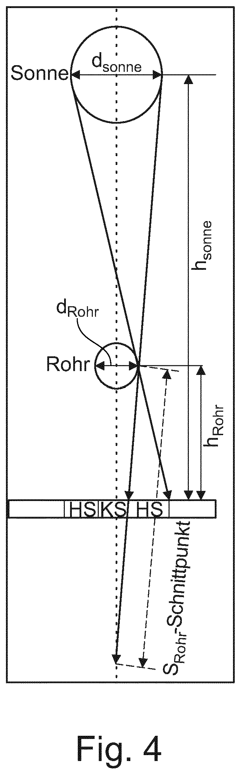

**5** zeigt den Schatten schematisch mit einer Erläuterung der Begriffe bzw. Bereiche Kernschatten KS und Halbschatten HS. Dabei stellt **Fig. 4** den Halbschatten als den sich auf dem Schattenempfänger ergebenden Abstand zwischen den Schnittpunkten des Schattenempfängers mit zwei Linien dar. Diese Linien sind die Tangenten an gegenüberliegende Seiten der Sonne und eine Seite bzw. einen Punkt des Receivers, wie in **Fig. 4** gezeigt. Die Darstellung in **Fig. 4** zeigt dabei den in der Darstellung rechten Halbschatten. Der Linke entsteht entsprechend durch Verwendung der Tangenten an die gegenüberliegende Seite des Receiverrohrs. Der Kernschatten ist der Bereich zwischen den Halbschatten.

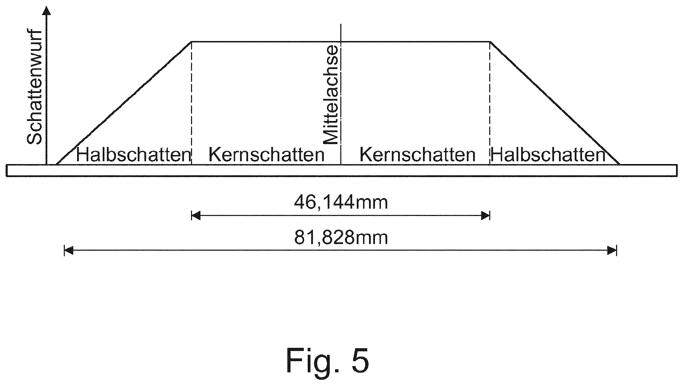

Die Breite des Halbschattens ist abhängig von der Entfernung der Schattenblende zum Schattenempfänger. Alle Schattenparameter können durch den Sonnendurchmesser $d_{Sonne}$, den Receiverdurchmesser $d_{Rohr/Receiver}$ (Rohrdurchmesser in der Darstellung), den Abstand $h_{Rohr}$ Receiver zu Schattenempfänger, beispielsweise Träger T, und Planetenabstand $h_{Sonne}$ Sonne-Schattenempfänger berechnet werden. **Fig. 5** zeigt beispielhaft den Schatten des Receiverrohrs auf einem Schattenempfänger mit Hervorhebung des mittigen Kernschattens und der seitlichen Halbschatten, nebst bevorzugter Maßangaben. Hier ist wahrscheinlich, dass man von Schatten (Kollektoren) auf der Erde ausgehen kann und somit ein ,Sonnendurchmesser' von 0,5° relevant ist. Die Breite des Kernschattens und die des Halbschattens lassen sich insbesondere durch die Entfernung der Schattenblende zum Schattenempfänger berechnen. Hierbei nimmt man den Winkelausschnitt des Sonnendurchmessers von 0,5° und verwendet den Tangens, um die Breite des Halbschatten zu berechnen. Die vorliegende Erfindung analysiert dagegen die Geometrie und Intensität des Schatten. Es werden keine sonstigen Informationen zu Sonne oder dergleichen benötigt. Selbst weitere Unschärfeeffekte, wie beispielsweise Zirruswolken in oberen Atmosphärenschichten oder hohe Luftfeuchtigkeit, irritiert den Algorithmus der vorliegenden Erfindung nicht.

Um die Abweichung von der Kollektorposition zur optimalen Position zu bestimmen, wird die Position des Schattens der Schattenblende auf dem Schattenempfängers, vorzugsweise eines Schattens der Konstruktion, vorzugsweise des Receiverrohrs, auf dem Schattenempfänger, vorzugsweise des Trägers T, bestimmt werden.

Dies erfolgt erfindungsgemäß bevorzugt mittels einer Kamera K, vorzugsweise einer IP Kamera. Die Kamera sollte insbesondere für die Umgebungsbedingungen ausgelegt sein. Hier ist vor Allem der Temperaturbereich und die Schutzklasse für Wasser und Staub zu berücksichtigen. Nachtsichtfähigkeiten sind in der Regel nicht von Bedeutung. Parameter wie Kontrast, Empfindlichkeit und Farbraum im Standardbereich sind ausreichend. Bevorzugt sind auch Zeilenkameras oder andere farb- helligkeitsdigitalisierenden Sensoren.

Bei der Analyse des Schattens ist insbesondere alternativ die Bestimmung zweier möglicher Abweichungen bevorzugt. Einerseits kann die absolute Abweichung des Schattens (Ist-Position im Vergleich zur Soll-Position) bestimmt werden, die eine Winkelabweichung, bspw. in Grad, oder eine Positionsabweichung vom Mittelpunkt oder der Mittelachse zum Ergebnis hat. Andererseits kann eine Abweichung, die nur eine Tendenz (bspw. links oder rechts) zum Ergebnis hat, bestimmt werden. Beide Ansätze sind bevorzugt und geeignet, um Abweichungen bei der Nachführung zu reduzieren und bevorzugt zu eliminieren.

Der Einbau der Kamera erfolgt bevorzugt an der bestehenden Konstruktion, vorzugsweise an einem Träger der Schattenblende, vorzugsweise des Receivers, oder an diesem selbst. Die Kamera ist vorzugsweise zwischen Schattenblende und Schattenempfänger angeordnet.

Bevorzugte Ausführungsformen der Erfindung werden nachfolgend unter Bezugnahme auf die Zeichnungen beispielhaft beschrieben. Es handelt sich dabei lediglich um schematische Darstellungen, die häufig zur Verdeutlichung bestimmter Aspekte andere (optionale) Strukturen nicht darstellen oder aber auch verschiedene optionale miteinander einhergehende Aspekte in einer Darstellung berücksichtigen. Gleiche Bezugszeichen weisen in diesem Zusammenhang auf äquivalente, ähnliche, vergleichbare oder gleiche Bauteile in den dargestellten Ausführungsformen hin.

Die beschriebenen Ausführungsformen können innerhalb des Schutzumfangs der Ansprüche in vielerlei Hinsicht verändert werden. Dabei ist zu beachten, dass die Merkmale der oben genannten Ausführungsformen in einer einzigen Ausführungsform kombiniert werden können. Ausführungsformen der Erfindung können daher je nach Ausgestaltung alle oder nur einige der oben genannten Merkmale aufweisen. Die Offenbarung der Figuren soll den Schutzumfang der Erfindung nicht beschränken. Nachfolgend werden bevorzugte Ausgestaltungen unter Bezugnahme auf die Figuren beispielhaft beschrieben. Es zeigen:

**Fig. 1a-1**  eine schematische Darstellung eines Parabolrinnenkraftwerks

**Fig. 1a-2**  eine schematische Darstellung dessen Ausrichtung nach dem Sonnenstand

**Fig. 1a-3**  eine schematische Darstellung einer beispielhaften Reflektorkonstruktion mit einem Parabolrinnenspiegel,

**Fig. 1b**  eine schematische Darstellung einer beispielhaften Reflektorkonstruktion mit Fresnel-Spiegel-Kollektoren,

**Fig. 1c**  eine schematische Darstellung einer beispielhaften Reflektorkonstruktion in einem Zentralreceiverkraftwerk, hier einem Solarturmkraftwerk,

**Fig. 1d**  eine schematische Darstellung einer beispielhaften Reflektorkonstruktion in einer Anlagen mit Parabolspiegel bzw. einer Solar-Stirling Anlage,

**Fig. 2** den schematischen Aufbau eines bekannten Systems mit einem PV-Zellen- Sensor,

**Fig. 3a** das Beispiel des Schattenwurfes eines Receiverrohres einer Parabolrinnenanlage im Kollektor

**Fig. 3b** vereinfachte gerenderte Darstellung des Schattenwurfes eines Receiverrohres einer Parabolrinnenanlage im Kollektor

**Fig. 3c** vereinfachte gerenderte Detail-Darstellung des Schattenwurfes eines Receiverrohres einer Parabolrinnenanlage im Kollektor

**Fig. 3d** vereinfachte gerenderte Darstellung des Schattenwurfes eines Receiverrohres einer Parabolrinnenanlage im Kollektor

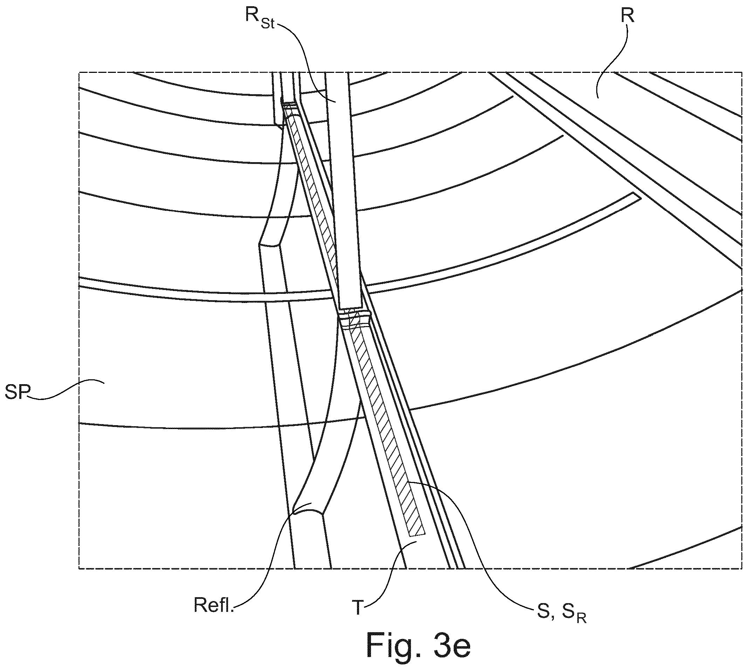

**Fig.3e** vereinfachte gerenderte Detail-Darstellung des Schattenwurfes eines Receiverrohres einer Parabolrinnenanlage im Kollektor

**Fig. 4** die geometrischen Bedingungen des Schattenwurfs am Beispiel des Receiverrohrschattens,

**Fig. 5** eine schematische Darstellung eines beispielhaften Schattens des Receiverrohrs auf einem Schattenempfänger mit Hervorhebung des mittigen Kernschattens und der seitlichen Halbschatten

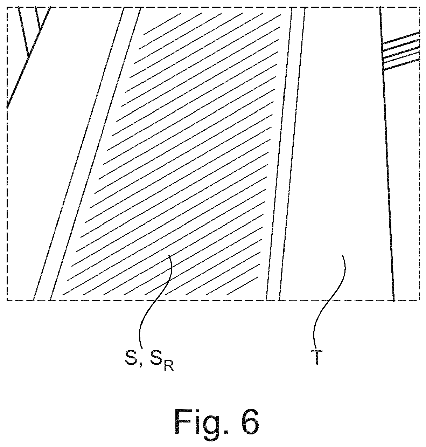

**Fig. 6** ein Beispiel eines Rohbild eines Schattens, das von der Kamera erfasst wird,

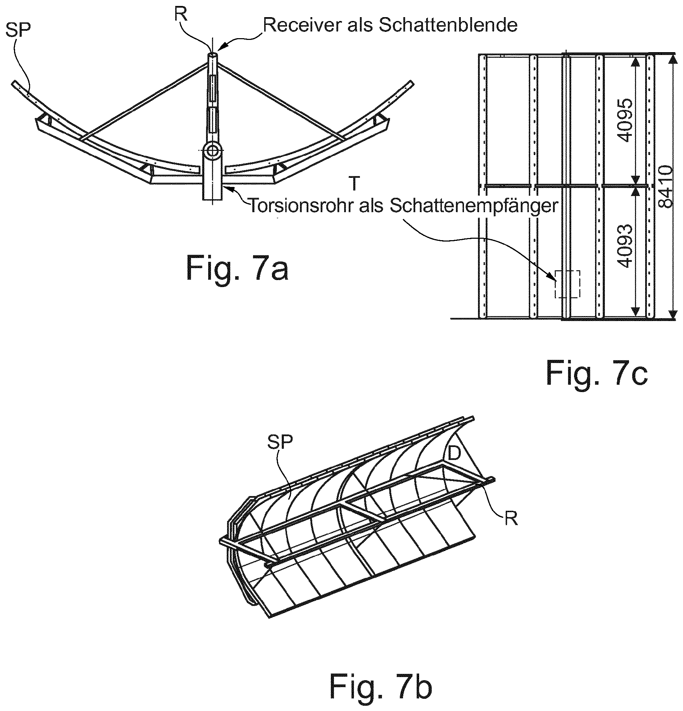

**Fig. 7** eine bevorzugte beispielhafte Konfiguration einer Parbolrinnenanlage.

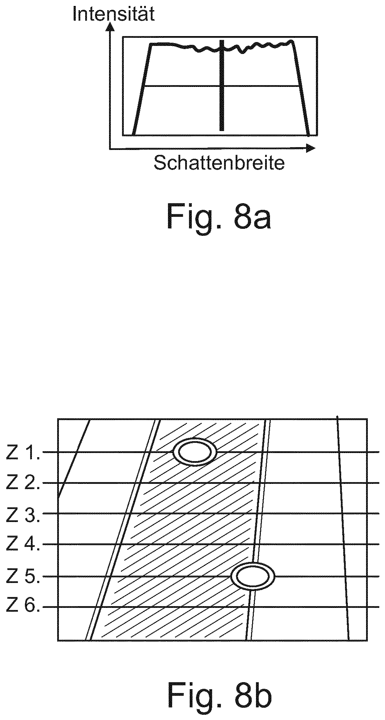

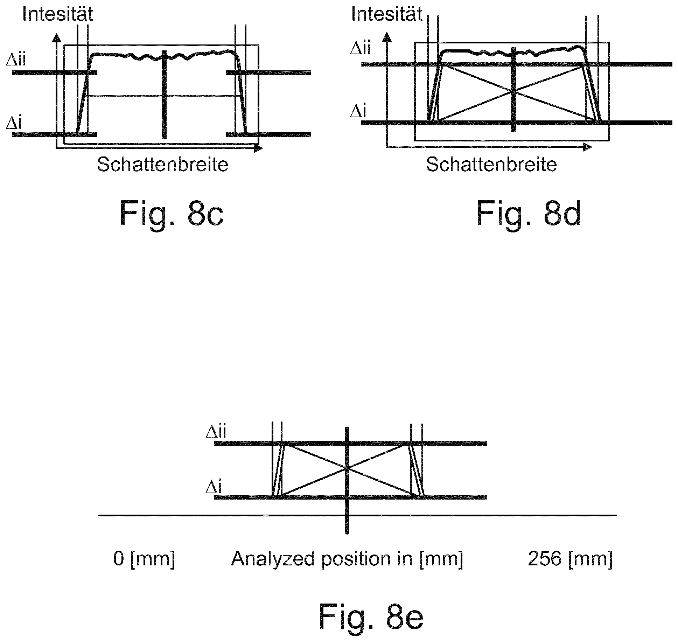

**Fig. 8** eine beispielhafte Visualisierung eines bevorzugten Algorithmus mit den Schritten: Zerlegen der Bildzeile in Schwarz/Weiß-Werte und/oder Erhöhen des Kontrasts **(Fig. 8a),** Auswählen von mehreren Bildzeilen **(Fig. 8b),** Ermitteln des Schatten Ein-, Austritt und Halbschattenbereichs für jede Zeile **(Fig. 8c),** Bilden einer geometrischen Umfassung für jede zu analysierende Linie **(Fig. 8d),** und Berechnen der Abweichung der Ist- von der Soll-Position **(Fig. 8e),** und

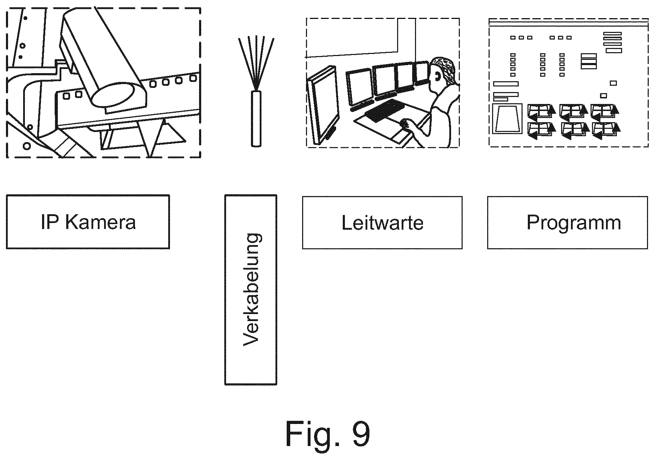

**Fig. 9** den beispielhaften Aufbau eines erfindungsgemäßen Systems.

In den nachfolgenden Erläuterungen wird die digitale Schattenanalyse beispielhaft anhand einer IP Kamera beschrieben. Die technischen Daten einer bevorzugten Kamera lassen sich, lediglich beispielsweise, wie folgt zusammenfassen:

| | |
|---|---|
| Image sensor | 1/3" High Resolution CCD image sensor |
| Effective pixels | 768(H) x 494(V) |
| Minimum Illumination | 0.3 Lux / F1.4, 0 Lux (IR ON) |
| Lens | F6.0mm |
| Lens Angle | 48° |
| Electronic Shutter | 1/60 (1/50) to 1/100,000 sec. |
| S/N Ratio | More than 48dB (AGC off) |
| White Balance | Auto |
| AGC | Auto |
| IRIS Mode | AES |
| Alarms Notification | Send image to FTP or email |
| Remote Access | Yes |
| Motion Detection | Yes |
| Infrared Lamps | 56 LEDs |
| IP rating | IP67 |
| Infrared Radiation Distance | 130 ft. |
| Operating Temperature | -10°C~40°C |
| Power Source | DC12V |

Die Auswertung des von der Kamera erfassten Schattenbildes kann auf unterschiedlichen Hardwareplattformen durchgeführt werden. Die Auswertung ist zeitunkritisch. Beispielsweise sind Zyklen von 1 Sekunde bevorzugt. 1 Sekunde soll beispielhaft aufzeigen, dass die Nachführung der Kollektoren grundsätzlich zeitunkritisch ist. Auf einem Standard IndustriePC benötigt der hierin beschriebene Algorithmus ca. 1 ms, so dass auch kürzere Zyklen angewandt werden können..Die Zyklen sollten vorzugsweise nicht länger als 60 Sekunden, vorzugsweise nicht länger als 30 Sekunden sein und liegen bevorzugt im Bereich von 1ms bis 15 Sekunden, und weiter bevorzugt von 0.5 Sekunden bis 5 Sekunden. Vorzugsweise wird zur Auswertung ein bekannter PC oder Server verwendet. Alternativ werden bevorzugt Mikroprozessoren/Signalprozessoren, insbesondere bei autarken Systemen, verwendet.

**Fig. 6** zeigt ein Beispiel eines Rohbild eines Schattens, das von der Kamera erfasst wird und von der Auswerteeinheit analysiert wird. Der Schatten entspricht dem vorab, insbesondere in Zusammenhang mit **Fig. 3** beschriebenen. Das Foto gemäß Fig. 6 zeigt den Schatten auf dem Träger T, hier dem Torsionsrohr einer Parabolrinnenanlage, in einer Auflösung von 768x494.

Das Rohbild kann über unterschiedliche Verkabelungsstandards übertragen werden oder aber kabellos, bspw. via Funk, WLAN, Bluetooth etc. Auch die hierbei nutzbaren Protokolle sind zahlreich.

Für eine Parabolrinnenanlage ist die mögliche Systemauflösung (Winkelbezogen) insbesondere abhängig von:

- Abstand (Position) der Schattenblende zur Drehachse der Parabolrinne
- Abstand (Position) des Schattenempfangers zur Drehachse der Parabolrinne
- Position der Kamera,
- Aufnahmewinkel der Kamera
- Auflösung der Kamera
- Auflösung des verwendeten Algorithmus

Nachfolgen wird eine Musterberechnung angestellt, bei der die Systemauflösung bei etwa 0.03 ° und der Messbereich bei minimal 2.1 ° liegt. Weitere bevorzugte Bereiche ergeben sich aus der gesamten Beschreibung. Bei diesen Parametern ist vorzugsweise der Wiederholungsfehler gering bzw. ist die Anfahrgenauigkeit hervorragend. Das Ergebnis ist vorzugsweise nicht von Witterung, Einstrahlungsintensität oder Verschmutzung abhängig.

Fig. 7 zeigt eine bevorzugte beispielhafte Konfiguration einer Parabolrinnenanlage im Querschnitt (Fig. 7a) sowie in schematischer dreidimensionaler Ansicht (Fig. 7b) und in Draufsicht (ohne Spiegel SP, also nur Unterkonstruktion sichtbar) (Fig. 7c). Das System umfasst mehrere Siegelelemente Sp, die einen Reflektor, hier eine Parabolrinnne bilden. Die Spiegel bündeln das einfallende Sonnenlicht derart, dass es auf den Receiver, hier ein Receiver- bzw. Absorberrohr R, konzentriert wird. Der Receiver ist im Brennpunkt bzw. in der Brennlinie des Reflektors angeordnet. Das System weise eine Hinter- oder Stützkonstruktion zum Halten des Reflektors und des Receivers auf. Die Stützkonstruktion kann auf verschiedene Art und Weise realisiert werden. Das System ist nachführbar, das heißt zumindest entlang einer Achse beweglich. Die bevorzugte Ausführungsform ist, wie hier dargestellt, entlang einer im Bereich des tiefsten Punkts der Parabolrinne angeordneten Achse schwenkbar. Diese Achse ist vorzugsweise parallel zur Längsachse des Receivers.

Mit beispielhafter Referenz dazu sowie zu vorab beschriebenen Figuren, insbesondere Figuren 3 bis 6, wird nachfolgend eine bevorzugte Berechnung der Systemauflösung sowie die Bestimmung des Erfassungs- und Messbereichs diskutiert.

Die in Fig. 7 gezeigte bevorzugte Kollektorkonstruktion hat sich als besonders vorteilhaft erwiesen. Die Konstruktion umfasst Parabolrinnenkollektoren. Als Schattenblende wird das Receiverrohr verwendet. Die Funktion des Schattenempfängers übernimmt das zentrale Torsionsrohr T der Hinterkonstruktion.

Die Konstruktion gemäß einem bevorzugten Ausführungsbeispiel hat folgende Parameter:

| Parameter | Wert | Einheit |
|---|---|---|
| Zu beobachtender Blickwinkel | 256 | [mm] |
| Auflösung der Kamera (pro Zeile) | 768 | [Pixel] |
| Abstand Schattenempfänger | 1905 | [mm] |
| Schattenbreite | 110 | [mm] |
| Auflösung des Algorithmus | 3 | [Pixel] |

Die oben aufgeführten Parameter führen zu der unten berechneten Genauigkeit. Grundsätzlich kann man sagen, dass die 768Pixel für eine signifikante Wirkungsgradsteigerung ausreichen und das System wirtschaftlich interessant machen. Mit jetzt schon als Standard erhältlichen Technik von 1920Pixeln verdoppelt sich die Auflösung also kann hier der Bereich zwischen bzw. größer als 768Pixel und 1920Pixel verwendet werden.

Nachfolgend wird beispielhaft die Berechnung der Systemauflösung gezeigt.

Hier kann unterschieden werden zwischen der Auflösung des Schattenempfängers und der später zu messende Größe, z.B., der Abweichung des Drehwinkels.

Relevante Größen für die Systemauflösung des Schattenempfängers sind bevorzugt

- der zu beobachtende Blickwinkel [mm]
- die Auflösung der Kamera [Pixel]
- die zu erwartende Auflösung des Algorithmus [Pixel].

Dabei ist die

*Auflösung Schattenempfänger* = [mm] / *Auflösung Kamera* [Pixel] * *Auflösung Algorithmus* [Pixel]

$$\textit{Auflösung Schattenempfänger} = 256~[\text{mm}]~/~768~[\text{Pixel}] * 3~[\text{Pixel}] = 1~[\text{mm}]$$

*Auflösung Schattenempfänger* = 1 [mm]

Größen für die Systemauflösung, um die Abweichung des Drehwinkels zu messen, sind bevorzugt

- Auflösung Schattenempfänger
- Abstand (Position) Schattenblende zum Schattenempfänger

Dabei bestimmt sich:

*Auflösung Drehwinkel* = arctan (*Auflösung Schattenempfänger* [mm] / *Abstand Schattenempfänger* [mm])

*Auflösung Drehwinkel* = arctan (0.00052)

*Auflösung Drehwinkel* = 0.029794 [°]

Der Erfassungsbereich für den maximalen Messbereich des Drehwinkels von Interesse. Relevante Werte sind

- Breite des Schattenempfängers
- Breite des Schattens

Bei den nachfolgenden Berechnungen ist zu beachten, dass sich bei einer Halbierung des Messbereichs, bspw. durch eine Halbierung des Blickwinkels, die Auflösung verdoppelt (mathematisch halbiert).

$$\textit{Messbereich} = \text{arctan}~(\textit{Bewegungsbereich Schatten}~[\text{mm}]~/~\textit{Abstand Schattenempfänger}~[\text{mm}])$$

*Messbereich* = arctan ((½ *Blickwinkel* [mm] - ½ *Schattenbreite* [mm] )/ *Abstand Schattenempfänger* [mm])

$$\textit{Messbereich} = \text{arctan}~((½~256~[\text{mm}] - ½~110~[\text{mm}]~)/~\textit{Abstand Schattenempfänger}~[\text{mm}])$$

*Messbereich* = ±2.1945 [°]

Die Auswertung der Messung sowie der verwendete Algorithmus kann auf verschiedene Weise umgesetzt werden. Bei einem bevorzugten Verfahren erfolgt die Auswertung wie folgt (vgl. **Fig. 8):**

1) Bild aus der Kamera in den Speicher kopieren
2) Eine Bildzeile in Schwarz/Weiß-Werte zerlegen und den Kontrast erhöhen. Dabei wird die Intensität des Schattens entlang einer der in Fig. 8b dargestellten Zeilen, wie in Fig. 8a gezeigt, über die Breite des Schattens (mm) aufgetragen. (vgl. **Fig. 8a)**
3) Dies geschieht für mehrere Bildlinien (vorzugsweise mindestens 2, weiter bevorzugt mindestens 4 und besonders bevorzugt 6 oder mehr als 6 Zeilen), insbesondere um eventuell punktuelle verschmutze Bereiche (bspw. Vogelkot) zu erkennen und aus der Analyse auszuschließen. (vgl. **Fig. 8b)**
Verschmutzungen sind bei der erfindungsgemäßen Lösung jedoch vorteilhafterweise nur im Bereich des Schattenübergangs problematisch, vgl. Zeile 5 in **Fig. 8b.** Im Schatten selbst haben sie keinen Einfluss auf das Messergebnis, vgl. Zeile 1 in **Fig. 8b.** Im Beispiel gemäß **Fig. 8** ist Zeile 1 unproblematisch, da die Verschmutzung innerhalb des Schattens und nicht im Übergangsbereich auftritt. Zeile 5, in der eine Verschmutzung im Übergangsbereich vorliegt, wurde hier für die Schattenanalyse nicht herangezogen.
4) Schatten Ein-, Austritt und Halbschattenbereich für jede Zeile ermitteln. Dies kann über einstellbare Intensitätswerte bzw. Intensitätsschwellwerte erfolgen. (vgl. **Fig. 8c)**

5) Für jede zu analysierende Linie wird *ein Art* Viereck, insbesondere ein Trapez gebildet. Dies erfolgt bevorzugt im Rahmen einer geometrischen Analyse bzw. Bildbearbeitung. Dazu werden vorzugsweise vier Punkte bestimmt: Schatteneintritt und Schattenaustritt (in Fig. 8d links und rechts außen/unten) sowie Kernschattenein- und Kernschattenaustritt (in Fig. 8d links und rechts außen/oben). Gemäß einer bevorzugten Ausführungsform, können die Punkte über einen definierten Pufferwert gegenüber dem geometrisch ermittelbaren Wert, vorzugsweise nach innen bezogen auf das Trapez, verschoben werden. Der Puffer ist in Fig. 8e als $\Delta i$ (unterer Grenzwert) $\Delta ii$ (oberer Grenzwert) gezeigt. $\Delta i + \Delta ii$ kann beispielsweise bei 3 bis 15% der Ist-Intensität (bezogen auf den geometrisch ermittelten Ist-Wert), vorzugsweise bei etwa 10% liegen. Alternative kann $\Delta i + \Delta ii$ kann beispielsweise bei 3 bis 15%, vorzugsweise etwa 10%, einer vorgegebenen Referenztoleranz, liegen. Schlechten Sichtbedingungen etc. kann damit vorzugsweise begegnet werden. Die Bestimmung ist vorzugsweise von den vorherrschenden Sonnenbedingungen unabhängig. (vgl. **Fig. 8d)**

6) Die Schattenmitte (Ist-Position) wird berechnet und mit der Soll-Position verglichen. Die Schattenmitte liegt im Flächenmittelpunkt des Vierecks. Über den X-Wert (Horizontale in **Fig. 8e)** kann die Abweichung von der Soll-Position berechnet werden, in der die Sonneneinstrahlung optimal auf den Receiver konzentriert wird. Über diese Differenz kann der Nachführweg bzw. -winkel berechnet werden und die Nachführung durchgeführt werden. Die Sollposition entspricht bevorzugt der geometrischen Mitte des Schattenempfängers. Es kann jedoch, insbesondere in Abhängigkeit von den geometrischen Bedingungen auch eine andere Sollposition bestimmt sein. Die Sollposition kann geometrisch bzw. graphisch markiert sein oder als mechanisches, detektierbares Element vorgesehen sein, um von der Kamera erfasst zu werden. Eine Auswertung kann dann direkt über die Bildverarbeitung erfolgen. Alternativ kann die Sollposition in der Bildreferenz vorgegeben sein. In dieser Variante kann die Sollposition vorzugsweise einstellbar sein und gegebenenfalls justiert werden.

Gemäß dem erfindungsgemäßen System und Verfahren wird bevorzugt eine IP Kamera zur Schattenanalyse verwendet. Als Schattenblende dient vorzugsweise das Receiverrohr und als Schattenempfänger dient vorzugsweise ein Träger, bevorzugt das sogenannte Torsionsrohr. Die Kamera nimmt das Bild des Schattens der Schattenblende auf und ein Programm analysiert die Position des Schattens.

Das System umfasst vorzugsweise (vgl. **Fig. 9)**

- eine (IP) Kamera + Verkabelung
- ein Programm zur Analyse der Signalwerte
- sowie eine Schnittstelle zur Leitwarte. Das Programm wird vorzugsweise direkt in der Leitwarte ausgeführt - im Gegensatz zum Stand der Technik bei dem das Programm, sofern vergleichbar, in einer separaten Steuerung ausgeführt wird.

Das erfindungsgemäße System und das erfindungsgemäße Verfahren haben sich als vorteilhaft erwiesen, insbesondere im Vergleich zu den aus dem Stand der Technik bekannten Lösungen.

So umfasst das erfindungsgemäße System weit weniger Komponenten als bisher bekannte Lösungsansätze. Hierdurch können Kosten eingespart werden. Die erforderlichen Komponenten sind schneller und einfacher zu installieren sowie schneller und einfacher in Betrieb zu nehmen. Es sind weniger Disziplinen beteiligt bzw. erforderlich, so dass geringere Mitarbeiterkosten im Bereich Entwicklung, Support, Installation und Inbetriebnahme entstehen. Da alle Komponenten seriell abhängig sind, also bereits im System vorhanden sind bzw. durch Standard zukaufteile ergänzt werden können, hat die neue Losung eine wesentliche höhere Verfugbarkeit. Im Fehlerfall kann die fehlerhafte Komponente zudem zügiger gefunden und schneller ausgetauscht werden.

Durch den Einsatz einer Kamera, vorzugsweise einer CCTV Kamera und besonders bevorzugt einer IP Kamera ist die Sensorik deutlich langlebiger als die des Standes der Technik, besonders im Vergleich zu Systemen die Komponenten wie PV-Zelle oder Signalverstärker verwenden, die einer Degeneration unterliegen und teils erhebliche Bauteilabweichung haben. Auch ist weit weniger Wartung erforderlich. Durch die Verwendung von qualitativen Serienprodukten ist teilweise quasi keine Wartung mehr nötig. Auch sind die Reinigungszyklen im Vergleich zu bestehenden Systemen wesentlich länger, im Mittel im Verhältnis 1 zu 10. Auch im Falle eines Defekts erweist sich das erfindungsgemäße System als vorteilhaft. Auch nach vielen Jahren sind einzelne Komponenten austauschbar, ohne dass durch die Gesamtsystematik Einschränkungen gegeben sind. Bei Austausch der Kamera muß beispielsweise nur die Technologie netzwerktauglich sein. Auflösung, Geschwindigkeit (Frames per second), Größe und viele andere Parameter sind nicht relevant bzw. eingeschränkt. Teilweise sind sie durch die Software parametrisierbar. Schließlich kommen im Vergleich zu PV-Zellen- Sensoren wesentlich mehr Hersteller zur Auswahl. Schließlich ist die Position der Kamera im System nicht auf einen speziellen Ort beschränkt, an dem sie montiert werden muss. Sie muss nur den Schatten im Aufnahmebereich erkennen.

Die Verkabelung im hier beschriebenen System ist reduziert. Eine Kosteinsparung kann so in der Beschaffung realisiert werden. Insbesondere fallen verschiedene Verkabelungsarten wie Signalkabel, Steuerungskabel und Netzwerkkabel weg und nur noch ein Netzwerkkabel bleibt übrig. Die Verkabelung ist zudem günstiger in der Installation, da nur eine Disziplin (Netzwerkkabel) beteiligt ist. Durch die bevorzugte Verwendung einer kabellosen Übertragungstechnologier, wie bspw. Der WLAN-Technologie (industrial WLAN), kann sogar das Netzwerkkabel entfallen. Es ergeben sich insgesamt weniger Steckerverbindungen, was zur weniger Fehlerquellen und damit weniger (EMV) Problemen führt.

Der Einsatz von digitaler Bildverarbeitung einfach, kostengünstig und zukunftssicher. Bei einem Plattformwechsel wie zum Beispiel des Betriebssystems oder der Hardware ist das System weiter einsetzbar. Es besteht in der Regel kein Bedarf an teuren und langen Wartungsverträgen. Auch können Performance Verbesserungen sehr einfach durch Software/Algorithmus Updates erreicht werden, insbesondere ohne in die mechanisch strukturellen Komponenten eingreifen zu müssen. Im Vergleich dazu müsse man bei einer Lösung mit PV-Zellen einen neuen Sensor entwickeln, was enorme Kosten allein für den Austausch im Feld verursachen würde. Die digitale Bildverarbeitung kann zur Beobachtung und groben Messung von Einstrahlungswerten benutzt werden. Damit kann beispielsweise eine grobe Wetteranalyse erfolgen, bspw. ‚klarer Tag' gegenüber ‚Feuchtigkeit' oder ‚bewölkt'. Schließlich kann eine höhere Präzision, vorzugsweise um ca. 0,3° gegenüber bekannten Systemen, erreicht werden. Eine solche höhere Präzision steigert bei einem normalen Industriekollektor den Gesamtwirkungsgrad um ca. 3%. Dies bedeutet, der Betreiber benötigt 3% weniger Land oder hat einen um 3% höheren Ertrag - bei geringeren Anschaffungs- und Wartungskosten. Das System ist auch wesentlich unempfindlicher und kann besser auf punktuelle Verschmutzungen (bspw. Vogelkot) und Staubbeeinträchtigungen reagieren und das Ergebnis besser kompensieren als herkömmliche Systeme. Schließlich ist auch die Fernwartung wesentlich vereinfacht. Das System kann zudem zur groben Messung der Einstrahlsituation verwendet werden. Die vorliegende Erfindung erlaubt es außerdem, die Leistung der Anlage gezielt zu steuern, bspw. auch über eine gewollte ‚Abweichung' von der optimalen Ausrichtung.

Soweit die vorgehende Beschreibung den Ausdruck "im Wesentlichen" verwendet, sind auch solche Ausführungsformen umfasst, in denen das jeweilige Merkmal vollständig oder komplett vorliegt. Die Wörter "Vielzahl" oder "mehrere" sind im Sinne von "mindestens zwei", d. h. zwei oder mehr zu verstehen. Sofern konkrete Werte angegeben werden, umfassen diese vorzugsweise auch geringfügige Abweichungen von diesen Werten, wie etwa Abweichungen von +/-10% oder +/-5% des jeweiligen Werts. Einzelne Aspekte der Erfindung können eigenständige Erfindungen bilden und also solche beansprucht werden.

**Patentansprüche**

1.    CSP-System mit einem Reflektor, wobei der Reflektor eine Parabolrinne ist, und einem Receiver, wobei der Receiver ein Receiverrohr ist, zum Konzentrieren der auf den Reflektor treffenden Sonneneinstrahlung auf dem Receiver, aufweisend eine Schattenblende, wobei die Schattenblende das Receiverrohr ist, und einen Schattenempfänger, sowie einen farb- und/oder helligkeitsdigitalisierenden Sensor, und eine Nachführungseinrichtung, ausgebildet um die Position von Reflektor und Receiver entsprechend einer Abweichung einer Schatten-Ist-Position von einer Schatten-Soll-Position anzupassen, **dadurch gekennzeichnet, dass** der Sensor eine Kamera ist, der angeordnet ist, den Schatten der Schattenblende auf dem Schattenempfänger zu erfassen, um die Abweichung der Schatten-Ist-Position von der Schatten-Soll-Position mittels digitaler Bildverarbeitung zu bestimmen.

2.    CSP-System nach Anspruch 1, wobei die Anordnung derart ausgebildet ist, dass bei einer optimalen Ausrichtung der Reflektoren zur Sonne der Schatten $S_R$ der Schattenblende an einer vorbestimmten Position, vorzugsweise mittig, auf den Schattenempfänger fällt.

3.    CSP-System nach einem der vorhergehenden Ansprüche, wobei die Kamera an der bestehenden Konstruktion befestigt ist, vorzugsweise an einem Träger der Schattenblende, vorzugsweise des Receivers, oder an diesem selbst.

4.    CSP-System nach einem der vorhergehenden Ansprüche, wobei die Kamera, zwischen Schattenblende und Schattenempfänger angeordnet ist.

5.    CSP-System nach einem der vorhergehenden Ansprüche, wobei der Auswertungszyklus des von dem Sensor erfassten Schattens etwa 1 Sekunde oder weniger beträgt.

6.    CSP-System nach einem der vorhergehenden Ansprüche, wobei das System, vorzugsweise die Steuerung, ausgebildet ist,

        1) ein Bild aus der Kamera in einen Speicher zu kopieren,
        2) das Bild auszuwerten, vorzugsweise indem eine Bildzeile in Schwarz/Weiß-Werte zerlegen und/oder der Kontrast erhöht wird,
3) wobei Schritt 2) vorzugsweise für mehrere Bildlinien erfolgt,
4) wobei der Schatten Ein-, Austritt und Halbschattenbereich für jede Zeile ermittelt wird,
5) wobei für jede zu analysierende Linie wird Viereck gebildet wird,
6) wobei die Schattenmitte (Ist-Position) berechnet wird und mit der Soll-Position verglichen wird, und wobei
7) die Nachführung entsprechend ausgeführt wird.

7. Verwendung eines CSP-Systems nach einem der vorhergehenden Ansprüche, um das System dem Sonnenstand nachzuführen.

8. Verfahren zum Nachführen eines CSP-Systems mit einem CSP-System nach einem der vorangegangenen Ansprüche, mit zumindest den nachfolgenden Schritten:
Detektieren des Schattens einer Schattenblende auf einem Schattenempfänger, Bildverarbeitung des Schattens und Bestimmen der Schattenposition relativ zu einer Referenzposition, Nachführen des CSP-Systems.

9. Verfahren nach Anspruch 8, wobei das Nachführen um einen im Verhältnis zum Wert der Abweichung der Schattenposition von der Referenzposition stehenden Wert erfolgt.

10. Verfahren nach Anspruch 8 oder 9, wobei zunächst ein Bild aus der Kamera in einen Speicher kopiert wird, wobei dann eine Bildzeile in Schwarz/Weiß-Werte zerlegt wird, wobei dann die Intensität des Schattens über die Breite des Schattens bestimmt wird, wobei dies vorzugsweise für mehrere Bildlinien, besonders bevorzugt für mindestens 2, weiter bevorzugt mindestens 4 und besonders bevorzugt 6 oder mehr als 6 Zeilen, erfolgt, wobei ferner der Schatten Ein-, Austritt und Halbschattenbereich für jede Zeile ermittelt wird und wobei anschließend die Schattenmitte berechnet und mit der Referenzposition des Schattens verglichen wird, abschließend wird über diese Differenz der Nachführweg bzw. -winkel berechnet und die Nachführung durchgeführt.

**Claims**

1. A CSP system comprising a reflector, the reflector being a parabolic trough, and a receiver, the receiver being a receiver tube, for concentrating the solar radiation incident on the reflector onto the receiver, comprising a shadow blind, the shadow blind being the receiver tube, and a shadow receiver as well as a colour and/or brightness digitizing sensor and a tracking means configured to adapt the position of the reflector and the receiver according to a deviation of an actual shadow position from a target shadow position, **characterized in that** the sensor is a camera arranged to detect the shadow of the shadow blind on the shadow receiver in order to determine the deviation of the actual shadow position from the target shadow position by digital image processing.

2. The CSP system according to claim 1, wherein the arrangement is configured such that, when the reflectors are optimally aligned with respect to the sun, the shadow $S_R$ of the shadow blind falls onto the shadow receiver at a predetermined position, preferably centrically.

3. The CSP system according to any one of the preceding claims, wherein the camera is fixed at the existing structure, preferably at a beam of the shadow blind, preferably of the receiver, or at the receiver itself.

4. The CSP system according to any one of the preceding claims, wherein the camera is arranged between the shadow blind and the shadow receiver.

5. The CSP system according to any one of the preceding claims, wherein the evaluation cycle of the shadow detected by the sensor is about 1 second or less.

6. The CSP system according to any one of the preceding claims, wherein the system, preferably the controller, is configured

(1) to copy an image from the camera into a memory,
(2) to evaluate the image, preferably in that a scan line is decomposed into black-and-white values and/or the contrast is increased,
(3) wherein step (2) is preferably carried out for several scan lines,
(4) wherein the shadow entrance, exit and penumbra region are determined for each line,

(5) wherein a rectangle is formed for each line to be analyzed,
(6) wherein the shadow centre (actual position) is calculated and compared with the target position, and wherein
(7) tracking is accordingly performed.

7. The use of a CSP system according to any one of the preceding claims to track the position of the sun with the system.

8. A method for tracking a CSP system with a CSP system according to any one of the preceding claims, comprising at least the following steps: detecting the shadow of a shadow blind on a shadow receiver, image processing of the shadow and determining the shadow position relative to a reference position, tracking the CSP system.

9. The method according to claim 8, wherein tracking is performed by a value that is proportional to the value of the deviation of the shadow position from the reference position.

10. The method according to claim 8 or 9, wherein firstly an image from the camera is copied into a memory, wherein then a scan line is decomposed into black-and-white values, wherein then the intensity of the shadow is determined over the width of the shadow, wherein this is preferably carried out for several scan lines, most preferably at least 2, more preferably at least 4 and most preferably 6 or more than 6 lines, wherein further the shadow entrance, exit and penumbra region are determined for each line, and wherein subsequently the shadow centre is calculated and compared with the reference position of the shadow, finally the tracking path or angle is calculated via this difference and tracking is performed.

**Revendications**

1. Système CSP avec un réflecteur, dans lequel le réflecteur est une parabole, et un récepteur, dans lequel le récepteur est un tube récepteur, pour la concentration, sur le récepteur, du rayonnement solaire arrivant sur le réflecteur, comprenant un diaphragme d'ombrage, dans lequel le diaphragme d'ombrage est le tube de récepteur, et un récepteur d'ombrage ainsi qu'un capteur de numérisation de la couleur et/ou de la luminosité et un dispositif de poursuite, conçu pour adapter la position du réflecteur et du récepteur en fonction d'un écart entre une position effective de l'ombre et une position de consigne de l'ombre, **caractérisé en ce que** le capteur est une caméra qui est disposée de façon à détecter l'ombre du diaphragme d'ombrage sur le récepteur d'ombrage, afin de déterminer l'écart entre la position effective de l'ombre et la position de consigne de l'ombre au moyen d'un traitement d'image numérique.

2. Système CSP selon la revendication 1, dans lequel la disposition est conçue de sorte que, lors d'une orientation optimale des réflecteurs par rapport au soleil, l'ombre $S_R$ du diaphragme d'ombrage tombe à une position prédéterminée, de préférence au centre du récepteur d'ombrage.

3. Système CSP selon l'une des revendications précédentes, dans lequel la caméra est fixée à la structure existante, de préférence à un support du diaphragme d'ombrage, de préférence du récepteur ou sur celui-ci.

4. Système CSP selon l'une des revendications précédentes, dans lequel la caméra est disposée entre le diaphragme d'ombrage et le récepteur d'ombrage.

5. Système CSP selon l'une des revendications précédentes, dans lequel le cycle d'analyse de l'ombre détectée par le capteur représente environ 1 seconde ou moins.

6. Système CSP selon l'une des revendications précédentes, dans lequel le système, de préférence le dispositif de commande, est conçu

1) pour copier une image de la caméra dans une mémoire,
2) pour analyser l'image, de préférence en décomposant une ligne d'image en valeurs de noir et blanc et/ou en augmentant le contraste,
3) dans lequel l'étape 2) a lieu de préférence pour plusieurs lignes d'image,
4) dans lequel la zone d'entrée, de sortie de l'ombre et la zone de semi-ombre sont déterminées pour chaque ligne,
5) dans lequel, pour chaque ligne à analyser, un quadrilatère est formé,
6) dans lequel le centre de l'ombre (position effective) est calculé et est comparé avec la position de consigne et

# EP 3 240 976 B1

dans lequel
7) la poursuite est exécutée en conséquence.

7. Utilisation d'un système CSP selon l'une des revendications précédentes, afin de poursuivre le système en fonction de la position du soleil.

8. Procédé de poursuite d'un système CSP avec un système CSP selon l'une des revendications précédentes, avec au moins une des étapes suivantes :
détection de l'ombre d'un diaphragme d'ombrage sur un récepteur d'ombrage, traitement d'image de l'ombre et détermination de la position de l'ombre par rapport à une position de référence, poursuite du système CSP.

9. Procédé selon la revendication 8, dans lequel la poursuite a lieu d'une valeur en rapport avec la valeur de l'écart de la position de l'ombre par rapport à la position de référence.

10. Procédé selon la revendication 8 ou 9, dans lequel une image est d'abord copiée de la caméra dans une mémoire, dans lequel une ligne d'image est alors décomposée en valeurs de noir et blanc, dans lequel l'intensité de l'ombre est ensuite déterminée sur la largeur de l'ombre, dans lequel cela est effectué de préférence pour plusieurs lignes d'image, plus particulièrement de préférence pour au moins 2, encore plus de préférence au moins 4 et plus particulièrement de préférence 6 ou plus de 6 lignes, dans lequel, en outre, la zone d'entrée, de sortie de l'ombre et la zone de semi-ombre sont déterminées pour chaque ligne et dans lequel, ensuite, le centre de l'ombre est calculé et comparé avec la position de référence de l'ombre, le trajet ou l'angle de poursuite étant enfin calculé à l'aide de cette différence et la poursuite est effectuée.

Fig. 1a-1

EP 3 240 976 B1

Sunlight

reflector

absorber

Suport
Structure

Fig. 1a-2

Fig. 1a-3

EP 3 240 976 B1

secondary reflector

absorber tube

reflector

light

Fig. 1b

Fig. 1c

absorber

reflector

Fig. 1d

Fig. 2

Fig. 3a

Fig. 3b

EP 3 240 976 B1

Fig. 3c

Fig. 3d

Fig. 3e

EP 3 240 976 B1

Fig. 4

Fig. 5

S, S$_R$                    T

# Fig. 6

R

SP

Receiver als Schattenblende

T

Torsionsrohr als Schattenempfänger

## Fig. 7a

4095

4093

8410

## Fig. 7c

SP

D

R

## Fig. 7b

Intensität

Schattenbreite

## Fig. 8a

Z 1.
Z 2.
Z 3.
Z 4.
Z 5.
Z 6.

## Fig. 8b

Intesität

Δii

Δi

Schattenbreite

## Fig. 8c

Intesität

Δii

Δi

Schattenbreite

## Fig. 8d

Δii

Δi

0 [mm]          Analyzed position in [mm]          256 [mm]

## Fig. 8e

IP Kamera

Verkabelung

Leitwarte

Programm

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 203012516 U
- US 2013133640 A1

- US 2013092155 A1